# EUROPÄISCHE PATENTSCHRIFT

(11) **EP 2 317 199 B1**
(45) Veröffentlichungstag und Bekanntmachung des Hinweises auf die Patenterteilung: **12.06.2013**
(21) Anmeldenummer: 10013796.7
(22) Anmeldetag: 20.10.2010
(51) Int. Cl.: F16L 33/08

(54) **Schlauchschelle**
Hose clip
Collier de serrage

(30) Priorität: 28.10.2009 DE 102009051128
(43) Veröffentlichungstag der Anmeldung: 04.05.2011
(73) Patentinhaber: NORMA Germany GmbH, 63477 Maintal (DE)
(72) Erfinder: Krauss, Mathias, 61130 Nidderau (DE); Lange, Frank, 60388 Frankfurt/Main (DE); Legel, Thomas, 63110 Rodgau (DE)
(74) Vertreter: Knoblauch, Andreas

(56) Entgegenhaltungen:
- EP-A2- 1 351 005
- NL-A- 8 901 037
- US-A- 2 940 150
- US-A- 3 747 172

## Beschreibung

Die Erfindung betrifft eine Schlauchschelle, insbesondere Schneckengewindeschelle, die ein Schellenband und ein Spannschloss mit einem Gehäuse, das an einem Endabschnitt des Schellenbandes befestigt ist, und einer Spannschraube aufweist, wobei eine Bodenwand des Gehäuses eine Ausformung aufweist, die in das Schellenband eingreift, und wobei die Ausformung auf der dem Schellenband zugewandten Seite einen Vorsprung und auf der vom Schellenband abgewandten Seite eine Vertiefung aufweist.

Eine Schlauchschelle ist beispielsweise aus DE 102 14 663 A1 bekannt. Hier ist ein Ende des Gehäuses in Umfangsrichtung radial nach innen umgebogen und greift in eine Durchgangsöffnung im Schellenband ein.

Die Belastbarkeit einer Schlauchschelle ist unter anderem dadurch bestimmt, wie die Kraftübertragung vom Schellenband auf das Gehäuse realisiert wird. Bei den auftretenden Spannkräften muss das Schellenband zuverlässig mit dem Gehäuse in Eingriff bleiben. Wenn das Schellenband gegenüber dem Gehäuse durchrutscht, dann ist es nicht möglich, die Schelle mit der erforderlichen Kraft zu spannen.

Andererseits möchte man das Gehäuse auf einfache Weise herstellen können, um die Produktionskosten niedrig zu halten.

US 2 940 150 zeigt eine gattungsgemäße Schlauchschelle mit einem Schellenband und einem Spannschloss mit einem Gehäuse, das an einem Endabschnitt des Schellenbandes befestigt ist. Das Spannschloss weist eine Spannschraube auf. Eine Bodenwand ist im Bereich eines Quersteges mit dem Schellenband vernietet. Hierzu weist die Bodenwand eine Ausformung auf, die in das Schellenband eingreift und auf der anderen Seite des Schellenbandes einen Nietkopf bildet. Die Ausformung bildet auf der dem Schellenband zugewandten Seite einen Vorsprung und auf der vom Schellenband abgewandten Seite eine Vertiefung.

US 3 747 172 zeigt eine Schlauchschelle mit einem Schellenband, das zwei Endabschnitte und einen Zwischenabschnitt aufweist. Der Zwischenabschnitt weist mehrere axial verlaufende Schlitze auf, zwischen denen ein erhöhter Bereich ausgeprägt ist. In einen der Schlitze kann ein Haken eingehängt werden, der an einem Ende des einen Endabschnitts angeordnet ist. Dieser Endabschnitt trägt auch ein Spannschloss mit einem Gehäuse und einer Spannschraube. Das Gehäuse weist mehrere Laschen auf, die in Schlitze eingesteckt und dann umgebogen werden können. Das Gehäuse weist eine Ausformung auf, die auf der dem Schellenband zugewandten Seite eine Ausnehmung und auf der vom Schellenband abgewandten Seite einen Vorsprung aufweist. Diese Ausformung stimmt mit einer entsprechenden Ausformung am Schellenband überein.

NL 8901037 zeigt eine Schelle mit einem Schellenband und einem Spannschloss. Das Spannschloss weist ein Gehäuse und eine Spannschraube auf. Die Spannschraube greift in Gewindeelemente an einem Endabschnitt des Schellenbandes. Der andere Endabschnitt des Schellenbandes ist durch zwei Öffnungen im Boden des Gehäuses geführt und zwar einmal von außen in das Gehäuse hinein und zum anderen aus dem Gehäuse wieder heraus.

Der Erfindung liegt die Aufgabe zugrunde, eine Schlauchschelle mit einer hohen Belastbarkeit zur Verfügung zu stellen.

Diese Aufgabe wird bei einer Schlauchschelle der eingangs genannten Art dadurch gelöst, dass die Vertiefung eine größere Fläche überdeckt als der Vorsprung und die Vertiefung ein größeres Volumen als der Vorsprung aufweist.

Eine derartige Ausformung kann auf einfache Weise dadurch hergestellt werden, dass man in die Bodenwand eine Einprägung oder Eindrückung vornimmt. Durch die spezielle Geometrie der Ausformung wird dabei aber nicht das gesamte Material aus der Vertiefung in den Vorsprung umgeformt, sondern es verbleiben in der Bodenwand Bereiche, die den Vorsprung umgeben, in denen die Bodenwand eine erhöhte Zugfestigkeit aufweist. Dadurch wird der Vorsprung auf der "Innenseite" des Gehäuses sehr stabil und darüber hinaus wird er mit ausreichender Festigkeit mit der Bodenwand verbunden. Der Vorsprung kann also hohe Zugkräfte aufnehmen, die vom Schellenband auf die Bodenwand des Gehäuses übertragen werden. Die Differenz des Volumens wird in die Bodenwand verdrängt, wodurch die Bodenwand sehr stark verfestigt wird. Dies ermöglicht weiterhin eine hohe Belastbarkeit der Schlauchschelle.

Vorzugsweise weist die Vertiefung eine radiale Tiefe auf, die maximal 50 % der Dicke der Bodenwand beträgt. Die Vertiefung durchsetzt also nur einen Teil der radialen Dicke des Bodens. Es verbleibt genügend Material, über das der Vorsprung Kräfte in die Bodenwand einleiten kann.

Vorzugsweise weist das Schellenband eine Durchgangsöffnung auf, in die die Ausformung eingreift. Dadurch wird die Herstellung des Schellenbandes einfach gehalten. Man muss lediglich eine Durchgangsöffnung herstellen, beispielsweise durch Stanzen.

Bevorzugterweise ist die Ausformung durch eine Kaltverformung gebildet. Durch eine Kaltverformung ergibt sich ein hoher Grad der Verfestigung. Die Bodenwand erhält im Bereich der Ausformung eine verbesserte Verwindungssteifigkeit.

Vorzugsweise ist das Gehäuse aus einem zu einem Tunnel geformten Blechteil gebildet, dessen Enden in der Bodenwand miteinander in Eingriff stehen und eine Trennfuge bilden, wobei die Ausformung zwischen zwei senkrecht zur Umfangsrichtung verlaufenden Abschnitten der Trennfuge angeordnet ist. Ein weiterer Aspekt bei der Belastbarkeit der Schlauchschelle ist die Fähigkeit des Gehäuses, Verwindungskräfte aufnehmen zu können. Dies gilt insbesondere bei einer Schneckengewindeschelle. Eine gute Verwindungssteifigkeit wird bei einem Gehäuse erzeugt, das sozusagen nahtlos ausgebildet ist, also aus einem Rohr gebildet wird. Ein derartiges Gehäuse erfordert jedoch einen relativ hohen Aufwand bei seiner Herstellung. Man verwendet daher im vorliegenden Fall ein zu Beginn der Fertigung beispielsweise ebenes Blechteil, das umgeformt wird, so dass seine Enden einander benachbart angeordnet sind. Durch die senkrecht zur Umfangsrichtung verlaufenden Abschnitte der Trennfuge zwischen den beiden Enden werden nun Kräfte in Umfangsrichtung, die die Bodenwand bei Belastung der Schlauchschelle beaufschlagen und zu Verwindungen führen können, abgefangen, so dass diese Verwindungskräfte relativ groß werden können. Der Begriff "senkrecht zur Umfangsrichtung" ist hier nicht im mathematisch exakten Sinn zu verstehen. Die Abschnitte der Trennfuge sollen allerdings so gerichtet sein, dass sie die erwähnten Kräfte in ausreichendem Maße aufnehmen können.

Vorzugsweise bilden die Abschnitte einen Teil einer Begrenzung einer Hammerkontur mit einem Kopfabschnitt und einem Stielabschnitt. Die Ausformung ist dann im Stielabschnitt angeordnet. Jenseits der Ausformung erweitert sich die Hammerkontur zum Kopfabschnitt. Dadurch wird eine Verstärkung der Bodenwand gegen Verwindungskräfte erreicht.

Hierbei ist bevorzugt, dass das Ende des Blechteils, das nicht die Hammerkontur aufweist, mindestens einen parallel zum Stielabschnitt verlaufenden Steg aufweist, der über die axiale Mitte der Bodenwand vorsteht. Damit wird mindestens ein weiterer Abschnitt der Trennfuge geschaffen, der im Wesentlichen senkrecht zur Umfangsrichtung verläuft und daher in der Lage ist, Kräfte aufzunehmen, die in Umfangsrichtung wirken. Dadurch wird die Bodenwand und damit das gesamte Gehäuse wesentlich stabiler ausgebildet.

Vorzugsweise weist das Gehäuse in Umfangsrichtung und/oder in Axialrichtung symmetrische Außenmaße auf. Damit ist es möglich, das Gehäuse in zwei Orientierungen mit dem Schellenband zusammenzubauen, was die Automation in der Fertigung vereinfacht. Diese Möglichkeit besteht, obwohl das Gehäuse eine höhere Belastbarkeit aufweist.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Schlauch- schelle, teilweise im Schnitt,
- Fig. 2: ein Gehäuse eines Spannschlosses in perspek- tivischer Darstellung,
- Fig. 3: das Gehäuse von unten und
- Fig. 4: eine Schnittansicht des Gehäuses.

Eine Schlauchschelle 1, die im vorliegenden Fall als Schneckengewindeschelle ausgebildet ist, weist ein Schellenband 2 auf, das ringförmig gebogen ist und auf einem Teil seiner Länge ein eingeprägtes Gewinde 3 aufweist.

Die Schlauchschelle 1 weist im Bereich eines ersten Endes 4 des Schellenbandes 2 ein Spannschloss 5 auf, das ein Gehäuse 6 und eine Schraube 7 aufweist. Die Schraube 7 ist drehbar und axial unverlierbar im Gehäuse 6 gehalten. Das andere, zweite Ende 8 des Schellenbandes ist zwischen der Schraube 7 und dem ersten Ende 4 hindurchgeführt. Wenn die Schraube 7 gedreht wird, dann wird das zweite Ende 8 weiter in das Spannschloss 5 hineingezogen oder daraus herausgedrückt. Durch das Hineinziehen kann man die Schlauchschelle 1 spannen.

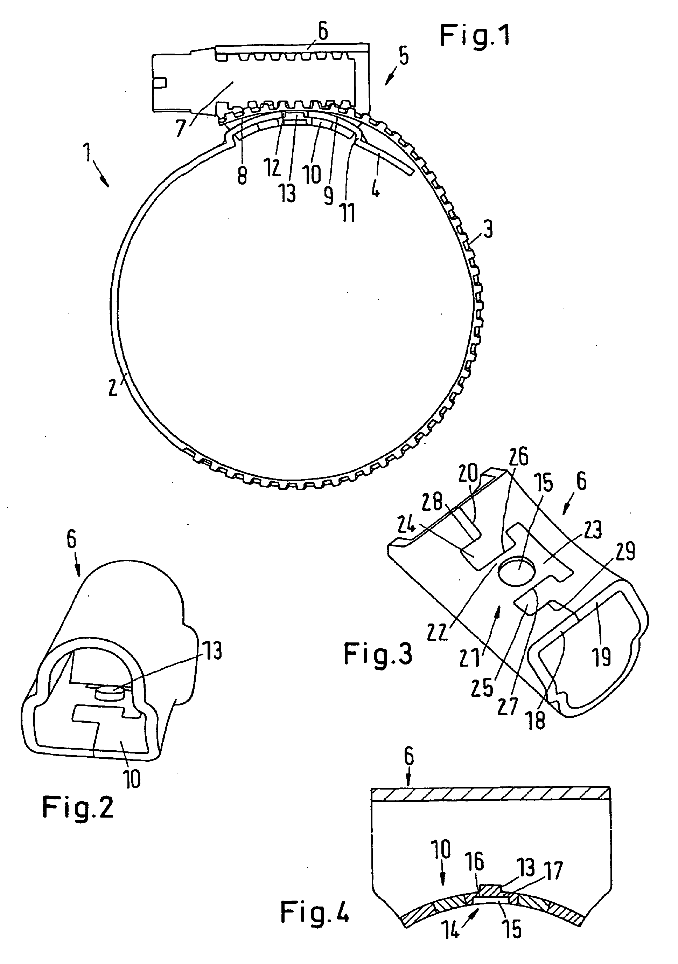

Das erste Ende 4 weist einen Abschnitt 9 auf, der um eine Bodenwand 10 des Gehäuses herum gebogen ist. Der Abschnitt 9 endet in einer hinteren Flanke 11, über die zumindest ein Teil der Zugkräfte vom Schellenband 2 auf das Gehäuse 6 übertragen werden können, wenn die Schlauchschelle 1 gespannt wird. Darüber hinaus weist der Abschnitt 9 eine Durchgangsöffnung 12 auf, in die ein Vorsprung 13 ragt, der an der Bodenwand 10 des Gehäuses ausgebildet ist. Für weitere Einzelheiten wird auf die Fig. 2 bis 4 verwiesen.

Der Vorsprung 13 bildet einen Teil einer Ausformung 14 in der Bodenwand. Die Ausformung 14 weist eine Vertiefung 15 auf der radialen Außenseite und den oben erwähnten Vorsprung 13 auf der radialen Innenseite der Bodenwand 10 des Gehäuses auf. Wie insbesondere in Fig. 4 zu erkennen ist, überdeckt die Vertiefung 15 eine größere Fläche als der Vorsprung 13. Wenn die Vertiefung 15 und der Vorsprung 13 kreisförmig ausgebildet sind, dann hat die Vertiefung 15 einen größeren Durchmesser als der Vorsprung 13, wobei die Vertiefung 15 den Vorsprung 13 vollständig überdeckt. Die Ausformung 14 ist durch eine Kaltverformung gebildet. Das Gehäuse 6 ist aus einem Metallblech gebildet. Ein Metall erhält bei einer Kaltverformung eine erhöhte Festigkeit. Durch die dargestellte Ausbildung der Ausformung 14 entstehen Abschnitte 16, 17 der Bodenwand, in die beim Herstellen der Ausformung 14 verdrängt wird. Dort ergibt sich dann eine erhöhte Festigkeit, auch wenn das Material der Bodenwand hier dünner als im übrigen Bereich der Bodenwand 10 ist. Die Dicke der Bereiche 16, 17 beträgt aber immer noch mindestens 50 % der Dicke der Bodenwand 10 im Übrigen, d.h. die Tiefe der Vertiefung 15 beträgt maximal 50 % der Dicke der Bodenwand 10. Durch die Herstellung der Ausformung 14 wird also nicht nur der Vorsprung 13 mit einer erhöhten Festigkeit versehen, sondern auch seine Verbindung mit der Bodenwand 10.

Es ist auch erkennbar, dass die Vertiefung 15 ein größeres Volumen aufweist als der Vorsprung 13. Die Materialdifferenz ist also in die Abschnitte 16, 17 hinein komprimiert worden.

Wie oben erwähnt, ist das Gehäuse 6 durch ein Blechteil gebildet, das zu einem Rohr oder Tunnel (Fig. 2) umgeformt worden ist, beispielsweise durch Biegen. Die Bodenwand 10 ist also durch zwei Endabschnitte 18, 19 dieses Blechteils gebildet, die an einer Trennfuge 20 zusammenstoßen. Die Trennfuge 20 verläuft im Bereich ihrer Enden in Umfangsrichtung etwa in der axialen Mitte des Gehäuses 6. Sämtliche Richtungsangaben beziehen sich auf die Darstellung der Fig. 1.

Der erste Endabschnitt 18 bildet eine Hammerkontur 21 mit einem Stielabschnitt 22 und einem Kopfabschnitt 23. Die Vertiefung 15 ist im Stielabschnitt 22 angeordnet. Der zweite Endabschnitt 19 weist eine entsprechend negative Form hierzu auf. Allerdings weist der zweite Endabschnitt 19 zwei Stege 24, 25 auf, die parallel zum Stielabschnitt 22 verlaufen und über die axiale Mitte des Gehäuses 6 überstehen. Damit ergeben sich beidseits des Stielabschnitts 22 Abschnitte 26, 27 der Trennfuge 20, die im Wesentlichen senkrecht zur Umfangsrichtung des Gehäuses 6 gerichtet sind. Weiterhin ergeben sich an den in Umfangsrichtung äußeren Seiten der Stege 24, 25 zwei weitere Abschnitte 28, 29, die ebenfalls im Wesentlichen senkrecht zur Umfangsrichtung des Gehäuses 6 gerichtet sind. Dadurch wird die Kraft gegen Verwindung, die die Hammerkontur 21 aufnehmen muss, zusätzlich mit abgefangen. Dies hat zur Folge, dass die Verwindungskräfte, die die Bodenwand 10 bei Belastung der Schlauchschelle 1 beanspruchen, viel stärker sein können als ohne die Stege 24, 25.

Es ist zu erkennen, dass zwischen der Vertiefung 15 und den beiden Abschnitten 26, 27 der Trennfuge 20 ein vergleichsweise kleiner Materialbereich verbleibt. Dieser Materialbereich muss das beim Herstellung der Ausformung 14 verdränge Material aufnehmen. Er wird dadurch sehr stark verfestigt. Der Stielabschnitt 22 wird also erheblich verstärkt. Gleichzeitig werden durch den dabei gebildeten Vorsprung 13 die Anschläge des Schellenbandes 2 an der Bodenwand 10, insbesondere die Flanke 11, deutlich entlastet. Die Schlauchschelle 1 kann nun so ausgelegt werden, dass sie höhere Spannkräfte entfaltet beziehungsweise mit höheren Drehmomenten eingesetzt werden kann.

Das Gehäuse 6 weist symmetrische Außenmaße auf, vorzugsweise sowohl in Umfangsrichtung als auch in Axialrichtung. Es ist daher ohne Belang, in welcher Orientierung das Gehäuse 6 mit dem Schellenband 2 zusammengebaut wird. Dies vereinfacht eine automatisierte Fertigung.

## Patentansprüche

1. Schlauchschelle, insbesondere Schneckengewindeschelle, die ein Schellenband (2) und ein Spannschloss (5) mit einem Gehäuse (6), das an einem Endabschnitt (4) des Schellenbandes (2) befestigt ist, und einer Spannschraube aufweist, wobei eine Bodenwand (10) des Gehäuses (6) eine Ausformung (14) aufweist, die in das Schellenband (2) eingreift, wobei die Ausformung (14) auf der dem Schellenband (2) zugewandten Seite einen Vorsprung (13) und auf der vom Schellenband (2) abgewandten Seite eine Vertiefung (15) aufweist, **dadurch gekennzeichnet, dass** die Vertiefung (15) eine größere Fläche überdeckt als der Vorsprung (13), und die Vertiefung (15) ein größeres Volumen als der Vorsprung (13) aufweist.

2. Schlauchschelle nach Anspruch 1, **dadurch gekennzeichnet, dass** die Vertiefung (15) eine radiale Tiefe aufweist, die maximal 50 % der Dicke der Bodenwand (10) beträgt.

3. Schlauchschelle nach Anspruch 1 oder 2, **dadurch gekennzeichnet, dass** das Schellenband (2) eine Durchgangsöffnung (12) aufweist, in die die Ausformung (14) eingreift.

4. Schlauchschelle nach einem der Ansprüche 1 bis 3, **dadurch gekennzeichnet, dass** die Ausformung (14) durch eine Kaltverformung gebildet ist.

5. Schlauchschelle nach einem der Ansprüche 1 bis 4, **dadurch gekennzeichnet, dass** das Gehäuse (6) aus einem zu einem Tunnel geformten Blechteil gebildet ist, dessen Enden (18, 19) in der Bodenwand (10) miteinander in Eingriff stehen und eine Trennfuge (20) bilden, wobei die Ausformung (14) zwischen zwei senkrecht zur Umfangsrichtung verlaufenden Abschnitten (26, 27) der Trennfuge (20) angeordnet ist.

6. Schlauchschelle nach Anspruch 5, **dadurch gekennzeichnet, dass** die Abschnitte (26, 27) einen Teil einer Begrenzung einer Hammerkontur (21) mit einem Kopfabschnitt (23) und einem Stielabschnitt (22) bilden.

7. Schlauchschelle nach Anspruch 6, **dadurch gekennzeichnet, dass** das Ende (19) des Blechteils, das nicht die Hammerkontur (21) aufweist, mindestens einen parallel zum Stielabschnitt (22) verlaufenden Steg (24, 25) aufweist, der über die axiale Mitte der Bodenwand (10) vorsteht.

8. Schlauchschelle nach einem der Ansprüche 1 bis 7, **dadurch gekennzeichnet, dass** das Gehäuse in Umfangsrichtung und/oder in Axialrichtung symmetrische Außenmaße aufweist.

## Claims

1. Hose clamp, in particular worm thread clamp, comprising a clamping band (2) and a turnbuckle (5) having a housing (6) which is attached to an end section (4) of the clamping band (2) and comprises a clamping screw, wherein a base wall (10) of the housing (6) comprises a shaping (14) that engages the clamping band (2), wherein the shaping (14) on the side facing towards the clamping band (2) has a projection (13) and on the side facing away from the clamping band (2) has a recess (15), **characterized in that** the recess (15) covers a larger area than the projection (13) and the recess (15) has a volume greater than that of the projection (13).

2. Hose clamp according to claim 1, **characterized in that** the recess (15) has a radial depth which is at most 50% of the thickness of the base wall (10).

3. Hose clamp according to claim 1 or 2, **characterized in that** the clamping band (2) includes a through opening (12) into which the shaping (14) engages.

4. Hose clamp according to any of claims 1 to 3, **characterized in that** the shaping (14) is formed by a cold working.

5. Hose clamp according to any of claims 1 to 4, **characterized in that** the housing (6) is formed from a sheet metal formed to be a tunnel, the ends (18, 19) of which are engaged with one another and form a kerf (20), the shaping (14) being arranged between two section (26, 27) of the kerf (20) that run perpendicular to the circumferential direction.

6. Hose clamp according to claim 5, **characterized in that** the sections (26, 27) form a part of a boundary of a hammer contour (21) with a head section (23) and a handle section (22).

7. Hose clamp according to claim 6, **characterized in that** the end (19) of the sheet metal part which does not have the hammer contour (21) has at least one web (24, 25) running parallel to the handle section (22) projecting over the axial center of the base wall (10).

8. Hose clamp according to any of claims 1 to 7, **characterized in that** the housing in circumferential direction and/or in axial direction has symmetrical outer dimensions.

## Revendications

1. Collier de serrage, notamment collier de serrage à vis sans fin, qui comporte une bande formant collier (2) et un manchon de serrage (5) avec une cage (6) qui est fixée à une extrémité (4) de la bande formant collier (2) et avec une vis de serrage, une paroi de fond (10) de la cage (6) comportant une déformation (14) qui pénètre dans la bande formant collier (2) et la déformation (14) comportant une partie en saillie (13) du côté proche de la bande formant collier (2) et une partie en creux (15) du côté éloigné de la bande formant collier (2), **caractérisé en ce que** la partie en creux (15) couvre une plus grande surface que la partie en saillie (13) et **en ce que** la partie en creux (15) a un plus grand volume que la partie en saillie (13).

2. Collier de serrage selon la revendication 1, **caractérisé en ce que** la partie en creux (15) a une profondeur radiale égale au maximum à 50 % de l'épaisseur de la paroi de fond (10).

3. Collier de serrage selon la revendication 1 ou 2, **caractérisé en ce que** la bande formant collier (2) comporte une ouverture de passage (12) dans laquelle pénètre la déformation (14).

4. Collier de serrage selon l'une des revendications 1 à 3, **caractérisé en ce que** la déformation (14) est formée par déformation à froid.

5. Collier de serrage selon l'une des revendications 1 à 4, **caractérisé en ce que** la cage (6) est constituée d'une pièce en tôle à laquelle a été donnée une forme de tunnel et dont les extrémités (18, 19) viennent en prise l'une avec l'autre dans la paroi de fond (10) et forment une ligne de joint (20), la déformation (14) étant agencée entre deux tronçons (26, 27) de la ligne de joint (20) qui s'étendent perpendiculairement à la direction circonférentielle.

6. Collier de serrage selon la revendication 5, **caractérisé en ce que** les tronçons (26, 27) constituent une partie d'une limitation d'un contour de marteau (21) avec une partie formant tête (23) et avec une partie formant manche (22).

7. Collier de serrage selon la revendication 6, **caractérisé en ce que** l'extrémité (19) de la pièce en tôle qui n'a pas le contour de marteau (21) comporte au moins une traverse (24, 25) qui s'étend parallèlement à la partie formant manche (22) et qui dépasse du centre axial de la paroi de fond (10).

8. Collier de serrage selon l'une des revendications 1 à 7, **caractérisé en ce que** la cage a des dimensions extérieures symétriques en direction circonférentielle et/ou en direction axiale.
